# EUROPEAN PATENT APPLICATION

(11) **EP 2 146 487 A2**
(43) Date of publication of application: **20.01.2010**
(21) Application number: 09158244.5
(22) Date of filing: 20.04.2009
(51) Int. Cl.: H04L 29/08

(54) **Method for notifying users of internet service events**

(30) Priority: 22.04.2008 TW 97114588
(71) Applicant: Mobile Action Technology Inc., Taipei Hsien (TW)
(72) Inventor: Wang, Hong-Yung, Taipei Hsien (TW); Chen, Ming-Hua, Taipei Hsien (TW)
(74) Representative: Dossmann, Gérard

(57) **Abstract**

A method for notifying users of Internet service events has acts of constructing an event notification module (100), receiving new event data (101) by the at least one Internet service server (20), determining whether new event data matches notification rules (102) by the at least one Internet service server (20), sending selected new event data to the event notification module (103) by the at least one Internet service server (20) when the new event data matches the notification rules, creating an event summary page in the event notification module (104) by the event notification module (10), notifying user (105) from dialing the end user cell phone number with the at least one event notification phone number by the event notification module (10) and hanging up by the event notification module (10) when the end user receives a phone call.

## Description

The present invention relates to a method, and more particularly to a method for notifying users of Internet service events on their portable device using caller identification (ID) display and an event summary page.

The advancement of computer and Internet technology has resulted in most electronic devices, such as laptops, desktops, cell phones, etc. being able to connect to the Internet. The electronic devices can connect to Internet service servers to browse web pages, use instant message service and read electronic mail (e-mail). However, in order to receive data from the Internet service servers, such as receiving event notifications from the Internet service services when the Internet service servers receive new event data, the electronic devices have to maintain a connection to the Internet and execute application programs corresponding to the Internet services. Once the electronic device is not connected to the Internet, the electronic device will not receive the new event data to allow users to be notified of the new event data.

In addition, connecting to the Internet is commonly done on desktops or laptops and since connection fees for the Internet by computer is cheap. However, the connection fees for the Internet by mobile device is per time period so is expensive, especially when the mobile device is international roaming. Accordingly, users will not maintain a mobile device connection to Internet all day. Therefore, users cannot receive notifications of the new event data and must reconnect sporadically to attain these.

Therefore, a cell phone having a periodic inquiring function, such as receiving e-mails or instant messages, is designed. An inquiring program or a thread is installed in the cell phone to auto-execute application programs for receiving the new event data.

However, a cell phone having low level processing unit or less memory cannot execute multiple application programs corresponding to the new event data at the same time because it will increase system loading of the cell phone. If the system of the cell phone is heavy loaded, the cell phone may work unreliably, and power consumption of the cell phone may increase a lot.

In addition, cell phones are battery powered, so standby time of the cell phone is limited by battery capacity. However, the battery for cell phone is getting smaller, and smaller battery results in less capacity of electric power. Therefore, the periodic inquiring function of the cell phone further shortens the standby time of the cell phone.

Furthermore, the application programs for receiving the new event data have to keep executing by the cell phone so that the application programs periodically receive new event data sent from the Internet service servers. If the cell phone reboots and the application programs for receiving the new event data are not executed by the user, the cell phone cannot receive the new event data. However, remembering to execute the application programs for receiving the new event data after the cell phone boots is inconvenient for users.

To overcome the foregoing shortcomings, some Internet service providers notify the users of the new event data by sending short messages, multimedia messages or WAP PUSH messages to the users. However, Internet service providers have to pay a great amount in fees for sending the messages. Furthermore, the message receivers have to pay fees for receiving the messages in some countries.

To overcome the shortcomings, the present invention provides a method for notifying users of Internet service events to mitigate or obviate the aforementioned problems.

The main objective of the invention is to provide a method for notifying users of Internet service events.

The method in accordance with the present invention comprises acts of constructing an event notification module, receiving new event data by the at least one Internet service server, determining whether new event data matches notification rules by the at least one Internet service server, sending selected new event data to the event notification module by the at least one Internet service server when the new event data matches the notification rules, creating an event summary page in the event notification module by the event notification module, notifying user from dialing the end user cell phone number corresponding to the new event data with the at least one event notification phone number by the event notification module and hanging up by the event notification module when the end user receives a phone call. Such a method reduces fees for connecting the cell phone to the Internet and allows a user to screen event that create a notification and screen those events for urgent or non-urgent cases.

Other objectives, advantages and novel features of the invention will become more apparent from the following detailed description when taken in conjunction with the accompanying drawings.
Fig. 1 is a flow chart of a method for notifying users of Internet service events in accordance with the present invention;
Fig. 2 is a is a functional block diagram of the method in Fig. 1;
Fig. 3 is a flow chart of subacts of an act of constructing an event notification module as shown in Fig. 1;
Fig. 4 is an illustration of a user data inputting page of the event notification module provided by a subact of providing inputting interface in Fig. 3;
Fig. 5 is an illustration of an Internet data inputting page provided by a subact of providing inputting interface in Fig. 3;
Fig. 6 is an illustration of an event summary page provided by an act of creating an event summary page in the event notification module in Fig. 1.

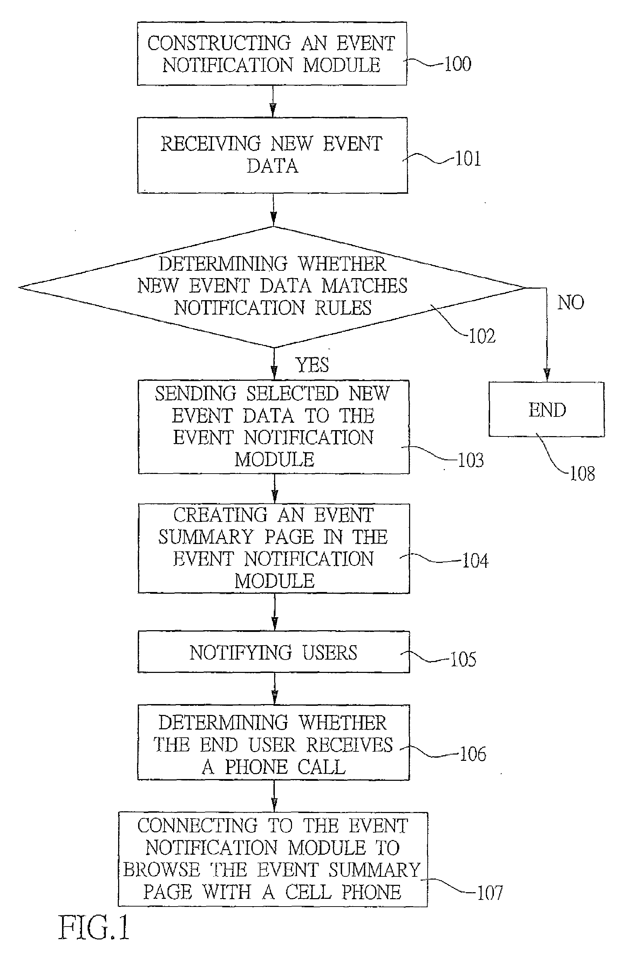

With reference to Fig. 1, a method for notifying users of Internet service events in accordance with the present invention comprises acts of constructing an event notification module (100), receiving new event data (101), determining whether new event data matches notification rules (102), sending selected new event data to the event notification module (103), creating an event summary page in the event notification module (104), notifying users (105), determining whether the end user receives a phone call (106) and connecting to the event notification module to browse the event summary page with a cell phone (107).

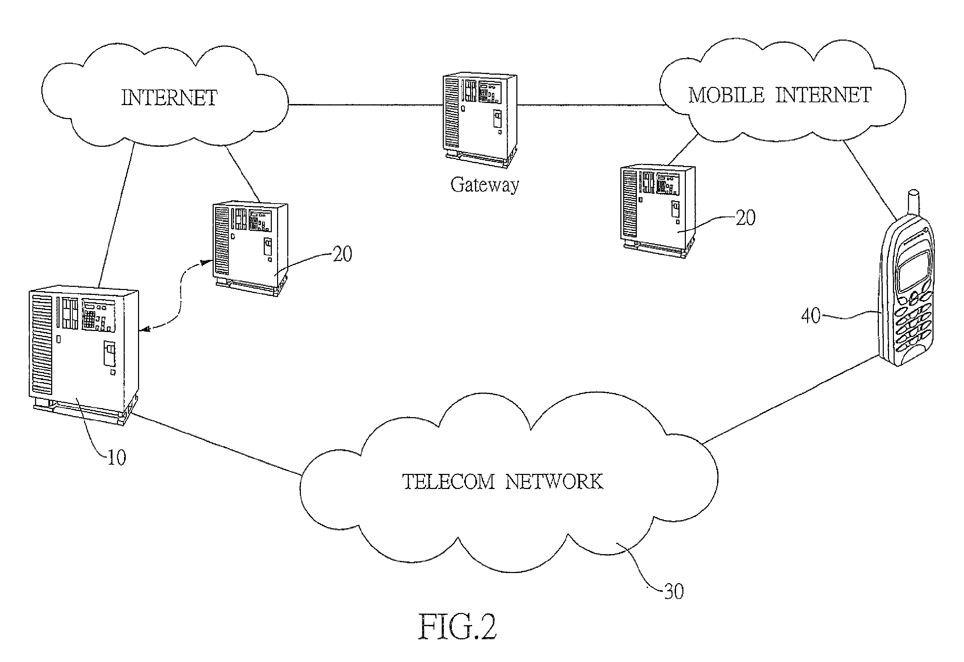

With further reference to Fig. 2, the act of constructing an event notification module (140) comprises constructing an event notification module (10) that connects to at least one Internet service server (20) and a telecom network (30). The event notification module (10) stores multiple cell phone numbers of end users and at least one event notification phone number. The event notification module (10) may comprise a single server or multiple servers connected together. The event notification module (10) may be combined with one of the at least one Internet service server (20) with a specific interface protocol, such as network protocols or application interface (API). The at least one Internet service server (20) may be an electronic mail (e-mail) server or an instant message service server.

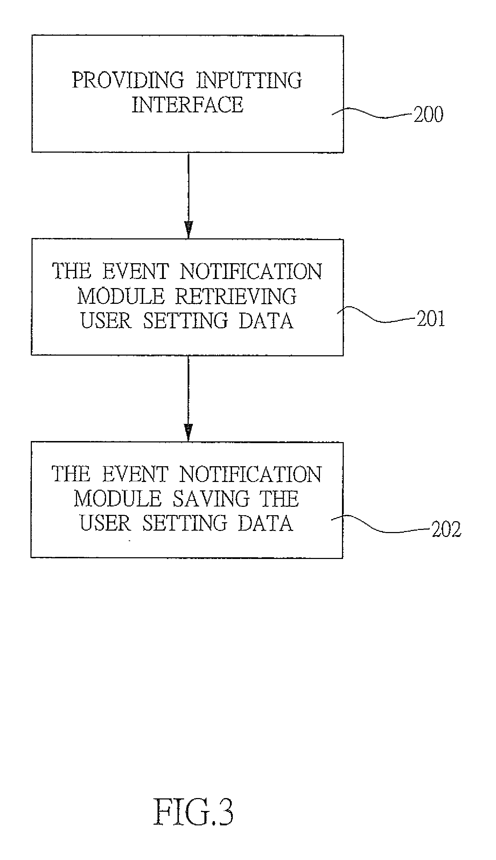

With further reference to Fig. 3, the act of constructing an event notification module (100) further comprises subacts of providing inputting interface (200), the event notification module retrieving user setting data (201) and the event notification module saving the user setting data (202).

The subact of providing inputting interface (200) comprises the event notification module (10) or the at least one Internet service server (20) providing at least one inputting interface for a user to input user setting data by using the user's cell phone (40) or computer via Internet.

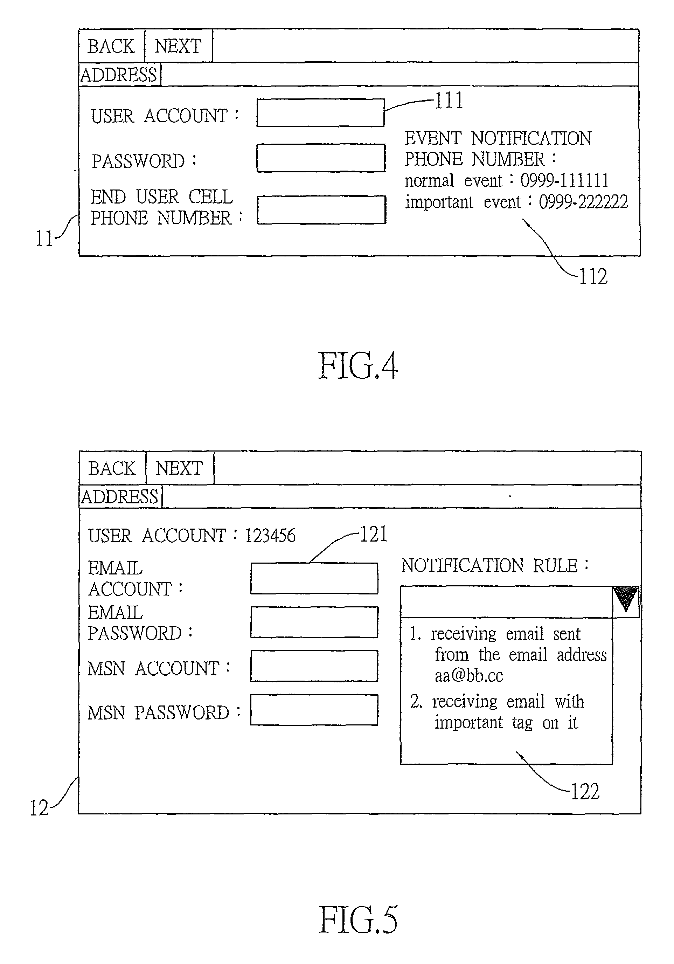

With further reference to Figs. 4 and 5, the inputting interface may be the web page-based interface and may comprise a user data inputting page (11) and an Internet data inputting page (12). The user data inputting page (11) may be provided by the event notification module (10), has multiple user setting data fields (111) and shows the at least one event notification phone number (112). The user setting data fields (111) may comprise a user account field, a password field, a end user cell phone number field and the like. The user can add the event notification phone number (112) in the contact list in his cell phone with a specific notification text string. For example, add the event notification phone number (112) "0999-111111" in the contact lists with the notification text string "you've got a new event", and add another event notification phone number (112) "0999-222222" in the contact lists with another notification text string "you've got an important e-mail". When the user's cell phone (40) receives a phone call from the event notification phone number (112), the user's cell phone (40) will show the notification text string corresponding to the event notification phone number (112) stored in the user's cell phone (40).

With further reference to Fig. 5, the Internet data inputting page (12) may be provided by the at least one Internet service server (20) and shows multiple user setting data fields (121) and a notification rules field (122). The user setting data fields (121) may comprise a user account field, an e-mail address field, an e-mail password field, an instant message service account field, an instant message service password field and the like. The notification rules field (122) may comprise notification rules such as "receiving e-mail sent from the e-mail address aa@bb.cc", "receiving e-mail with important tag on it" or the like.

The subact of the event notification module retrieving user setting data (201) comprises the event notification module (10) retrieving the user setting data from the inputting interface.

The subact of the event notification module saving the user setting data (202) comprises saving the user setting data in the event notification module (10).

Variations and modifications of the foregoing subacts and the inputting interface are possible. For example, the user data inputting page (11) and the Internet data inputting page (12) may be reorganized, such as being combined to be a single page or being separated into multiple pages. The user account may be, but is not limited to a unique code, the e-mail address or the end user's cell phone number.

The act of receiving new event data (101) comprises the at least one Internet service server (20) detecting receipt of new event data. For example, the e-mail server detects receipt of new e-mail, or the instant message service server detects receiving a new instant message.

The act of determining whether the new event data matches notification rules (102) comprises the at least one Internet service server (20) determining whether the new event data matches the notification rules. For example, if the Internet service server (20) is an e-mail server and the notification rule is "receiving e-mail sent from the e-mail address aa@bb.cc", the e-mail server will find the user account corresponding to the e-mail address that detected receipt of new e-mail. After that, the e-mail server will check whether the new e-mail is sent from the e-mail address aa@bb.cc. If confirmed, the at least one Internet service server (20) determines notifying the user of receipt of new event data to. Alternatively, an end (108) is reached and the act of receiving new event data (101) is awaited.

The act of sending selected new event data to the event notification module (103) comprises the at least one Internet service server (20) sending the selected new event data to the event notification module (10) when the new event data matches the notification rules. For example, if the Internet service server (20) is an e-mail server, the event data may comprise, but is not limited to an Internet service name, user account and contents of a new e-mail. Furthermore, the contents of the new e-mail may comprise text and attachments including, but not limited to pictures, sounds, images or the like.

The act of creating an event summary page in the event notification module (104) comprises the event notification module (10) collecting the new event data corresponding to the same user account and creating an event summary page (13) when the event notification module (10) receives new event data from the at least one Internet service server (20). The user can browse the event summary page (13) with their cell phones (40) via the Internet.

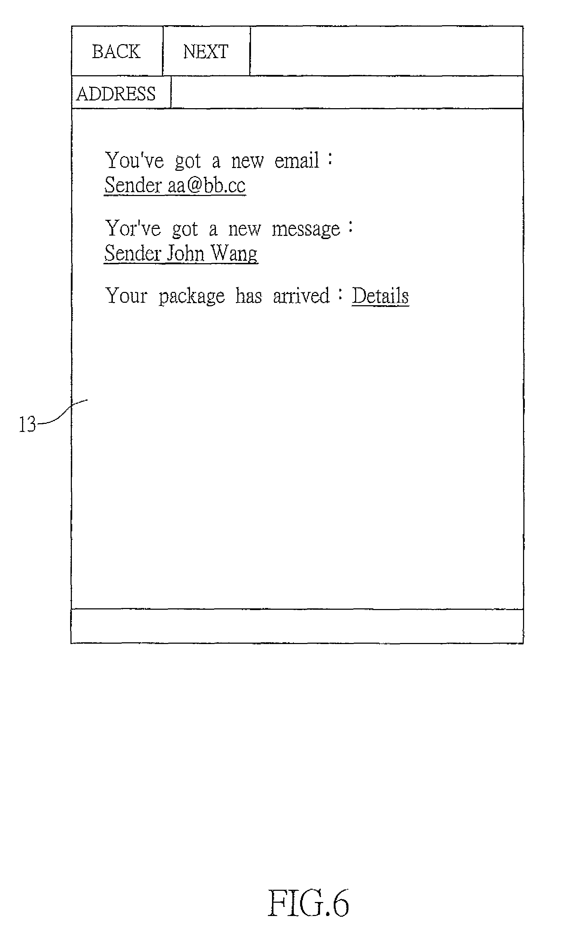

With further reference to Fig. 6, the event summary page (13) shows content of the new event data comprising at least one Internet service name of the new event data and text representing the new event data, such as "you've got a new e-mail". Furthermore, the event summary page (13) may provide a hyperlink for executing an application program installed in the user's cell phone (40) or showing web pages for details of the new event data for convenience of the user. For example, "sender: aa@bb.cc" is next to "you've got a new e-mail" and is combined with a hyperlink for browsing detailed information of this e-mails. Furthermore, if the new event data has text, pictures, sounds, images or other attachments, these can be referenced or shown in full on the event summary page (13).

The act of notifying users (105) comprises the event notification module (10) finding the at least one event notification phone number (112) as set in the user data inputting page (11) and the end user cell phone number of the user account corresponding to the new event data first. Then the event notification module (10) dials the end user cell phone number corresponding to the new event data with the event notification phone number (112) corresponding to the new event data.

The act of determining whether the end user receives a phone call (106) comprises the event notification module (10) detecting whether the end user receives the phone call. If the end user does not receive the phone call, the act of notifying users (105) will be re-acted, maybe periodically at pre-determined intervals until the event notification module (10) detects that the end user has received the phone call. Once the phone call is determined to have been received, the event notification module (10) hangs up the phone call. There are many ways to accomplish this act. For example, the event notification module (10) may use a ring detect technique, such as through signal channels in the T1/E1 Trunk and the common channel signaling system No. 7 (SS7) network, to detect whether the cell phone (40) is ringing for determining whether the end user receives a phone call. When the event notification module (10) detects receipt of a control signal representing that the cell phone (40) is ringing, the event notification module (10) hangs up the phone call. Furthermore, the event notification module (10) may have a preset call duration limit. When call duration of the event notification module (10) dialing the end user cell phone number reaches the preset call duration limit, the event notification module (10) hangs up the phone call.

The user's cell phone (40) keeps a record of incoming calls when the user's cell phone (40) receives the phone call from the event notification phone number (112) though the cell phone's (40) caller identification (ID) display function. Furthermore, because the event notification module (10) hangs up the phone call when it detects that the end user receives the phone call, the cell phone (40) may further keep a missed call record.

When the user checks the cell phone (40) and realizes that the event notification phone number (112) has called, the user will notice that new event data has arrived. The act of connecting to the event notification module to browse the event summary page with a cell phone (107) comprises the user using the cell phone (40) to connect to the event notification module (10) and browsing the event summary page (13). Additionally, the event notification module (10) may further determine whether the user is notified of the receipt of the new event data by checking whether the event summary page (13) is browsed or checking the end user receives a phone call with the ring detect technique. The act of notifying users (105) will be re-acted if the user is not notified of the receipt of the new event data and until the event notification module (10) detects that the event summary page (13) is browsed or the end user receives a phone call.

When receiving the phone call from the event notification phone number (112), the cell phone (40) may execute an application program to allow the user to obtain the new event data more easily. For example, an application program capable of detecting incoming call number or a browser program capable of detecting incoming call number may be installed in the cell phone (40). When the cell phone (40) receives a phone call from the event notification phone number (112), the application program or the browser application may detect and auto-run to show the event summary page (13).

Based on the foregoing descriptions, the present invention offers several advantages:
1. Universality: any cell phone (40) providing caller ID display function in any area is capable of keeping a record of incoming calls from the event notification phone number (112), users can be notified in any area, with any phone.
2. Low cost: because most of the telecommunication providers do not charge fees for missed calls and the event notification module (10) hangs up the phone call once the cell phone (40) receives the phone call from the event notification phone number (112), neither the event notification module (10) nor the end user is required to pay the telecommunication fee, even on the roaming condition.
3. Common infrastructure: because a specific protocol is used as a medium for connecting the event notification module (10) and the at least one Internet service server (20), the at least one Internet service server (20) can be connected easily to the event notification module (10) with a common and low cost system design without requiring additional infrastructure and expense.
4. Multiple service co-existance: the cell phone (40) does not need to frequently execute application programs or browser programs to connect to the Internet as conventional Internet service events notification method require, so power consumption and system loading of the cell phone (40) is minimized, compare to the conventional Internet service events notification method.
5. Multimedia content: the at least one Internet service server (20) is capable of sending text, pictures, sounds, images or any other multimedia data in the event data to the event notification module (10), and the event summary page (13) is capable of showing the text, pictures, sounds, images or any other multimedia data in the event data.

Even though numerous characteristics and advantages of the present invention have been set forth in the foregoing description, together with details of the structure and function of the invention, the disclosure is illustrative only. Changes may be made in detail, especially in matters of arrangement of parts within the principles of the invention to the full extent indicated by the broad general meaning of the terms in which the appended claims are expressed.

## Claims

1. A method for notifying users of Internet service events comprising acts of:
constructing an event notification module (100) that connects to at least one Internet service server (20) and a telecom network (30) and stores multiple end user cell phone numbers and at least one event notification phone number;
the at least one Internet service server (20) receiving new event data (101);
the at least one Internet service server (20) determining whether new event data matches notification rules (102);
the at least one Internet service server (20) sending selected new event data to the event notification module (10) when the new event data matches the notification rules (103);
the event notification module (10) creating an event summary page (104) that shows content of the new event data and allows the end user designated with the new event data to browse the event summary page by using a portable device (40);
the event notification module (10) notifying users by dialing the end user cell phone number corresponding to the new event data with the at least one event notification phone number (105); and
the event notification module (10) hanging up when the end user receives a phone call.

2. The method as claimed in claim 1, wherein the event notification module (10) further comprises a server, and the server connects to the at least one Internet service server (20) with an interface protocol.

3. The method as claimed in claim 1, wherein the event notification module (10) is further combined with one of the at least one Internet service server (20) with an interface protocol.

4. The method as claimed in any claim of claims 1 to 3, wherein the user's cell phone (40) installs an application program that detects whether the phone number of the incoming call is the event notification phone number, automatically connects to the event notification module (10) when the phone number of the incoming call is the event notification phone number and shows the event summary page (13).

5. The method as claimed in any claim of claims 1 to 3, wherein the event notification module (10) hangs up when the event notification module (10) detects that the cell phone (40) is ringing with a ring detect technique.

6. The method as claimed in any claim of claims 1 to 3, wherein the event notification module (10) has a preset call duration limit and detects whether call duration of the event notification module (10) dialing the end user cell phone number reaches the preset call duration limit, the event notification module (10) hangs up the phone call.

7. The method as claimed in any claim of claims 1 to 3 further comprising an act of determining whether the user is notified of the receipt of the new event data after the event notification module (10) hangs up and until the event notification module (10) detects that the end user receives a phone call, wherein the event notification module (10) determines whether the user is notified of the receipt of the new event data by detecting whether the cell phone rings with a ring detect technique.

8. The method as claimed in any claim of claims 1 to 3 further comprising an act of determining whether the user is notified of the receipt of the new event data after the event notification module (10) hangs up and until the event notification module (10) detects that the end user receives a phone call, wherein the event notification module (10) determines whether the user is notified of the receipt of the new event data by checking whether the event summary page (13) is browsed.
